# EUROPEAN PATENT SPECIFICATION

(11) **EP 0 437 298 B1**
(45) Date of publication and mention of the grant of the patent: **23.03.1994**
(21) Application number: 91200051.0
(22) Date of filing: 11.01.1991
(51) Int. Cl.: A01K 1/00

(54) **Cubicle partition**
Alkoventrennung
Séparation pour alcôves

(30) Priority: 12.01.1990 NL 9000085
(43) Date of publication of application: 17.07.1991
(73) Proprietor: DE BOER STALINRICHTINGEN B.V., NL-8938 AD Leeuwarden (NL)
(72) Inventor: Doornbosch, Jan Jaap, NL-9254 AJ Hardegarijp (NL); Wildschut, Gerben, NL-8915 DM Leeuwarden (NL)
(74) Representative: 't Jong, Bastiaan Jacobus

(56) References cited:
- DE-A- 2 607 834
- DE-A- 3 317 450
- FR-A- 2 461 450
- GB-A- 2 050 138
- NL-A- 8 202 803
- LANDTECHNIK. vol. 29, no. 4, 15 April 1974, HANNOVER DE pages 170 - 174; BISCHOFF: "VERFAHRENSTECHNISCHE EINORDNUNG DES SPERRBOXENSTALLES SYSTEM RYHOLM"

## Description

The invention relates to a cubicle partition in accordance with the preamble of claim 1 (DE-A-2607834).

Such cubicle partitions are used in cubicle stalls. Defined in each case between two adjacently placed cubicle partitions is a cubicle in which a cow can lie down, for instance to ruminate.

Another known cubicle partition of this type is the so-called R- or mushroom cubicle partition. In this known cubicle partition the two downward curved ends of the bar rail form the foot part. These two legs are cast into the floor or fixed onto the floor via a mounting plate welded thereto.

There is a clear trend in dairy cattle farming towards larger and heavier cows. The average height of the cattle is presently increasing by a centimetre per year. The cubicles defined by the cubicle partitions and therefore the cubicle partitions themselves must be given a larger form. In itself this already entails a weakening of the cubicle partitions. They are moreover more heavily loaded in use because the cattle is heavier. In order to be able to withstand the heavier loads increasingly thicker tubes have therefore been used in recent years for manufacture of the cubicle partitions.

With the continuing trend towards heavier cows the mush-room partitions must be given a disproportionately heavier form in order to be able to withstand the loads. The cost price thereof is therefore in danger of becoming undesirably high.

The invention now has for its object to provide a cubicle partition of the type specified in the preamble which combines great strength with limited use of material and therefore limited costs.

With the cubicle partition according to the invention this is achieved with the features as claimed in claim 1. The stand is formed by a rigid console and a bar rail closed in itself is fixed adjacent the top end thereof. The bar rail closed in itself is itself also rigid so that a rigid whole is obtained. Thus obtained at acceptable material costs is a partition which meets present requirements.

In preference the cubicle partition is embodied as characterized in claim 2. The console is substantially torsion-loaded and a tube or profile part has great torsional stiffness so that relatively thin material can be used.

An additional advantage of a cubicle partition with a single console is that the stall is easier to clean. There is only one leg from around which dirt has to be removed instead of two in the case of the usual R- or mushroom frame. The console can generally have a wider foot plate so that transverse loads can be more easily absorbed.

With the preferred embodiment of claim 3 the fixedly welded fixing plate provides an additional strengthening of the bar rail part of the cubicle partition. The shoulder bar can be connected to the fixing plate in further usual manner by means of brackets.

In the preferred embodiment of claim 4 the fixing plate has a greater stiffness and the wave valleys moreover form seats for firmly receiving the shoulder bar.

The vertical fixing plate as applied according to the preferred embodiment of claim 5 can be used either for fixing thereto of a per se known head bar, for instance also with brackets, or for fixing the front end of the cubicle partition against a wall.

The invention will be further elucidated in the following description with reference to the embodiments shown in the figures.

Fig. 1 shows a first embodiment of a cubicle partition according to the invention in the mounted position of use.

Fig. 2 is a partly broken away perspective detail view along arrow II in fig. 1.

Fig. 3 shows a partly perspective detail view along arrow III in fig. 1.

Fig. 4 shows a view corresponding with fig. 1 of another embodiment.

Fig. 5 shows a partly perspective detail view along arrow V in fig. 4.

Fig. 6 shows a side view corresponding with fig. 1 and 4 of yet another embodiment.

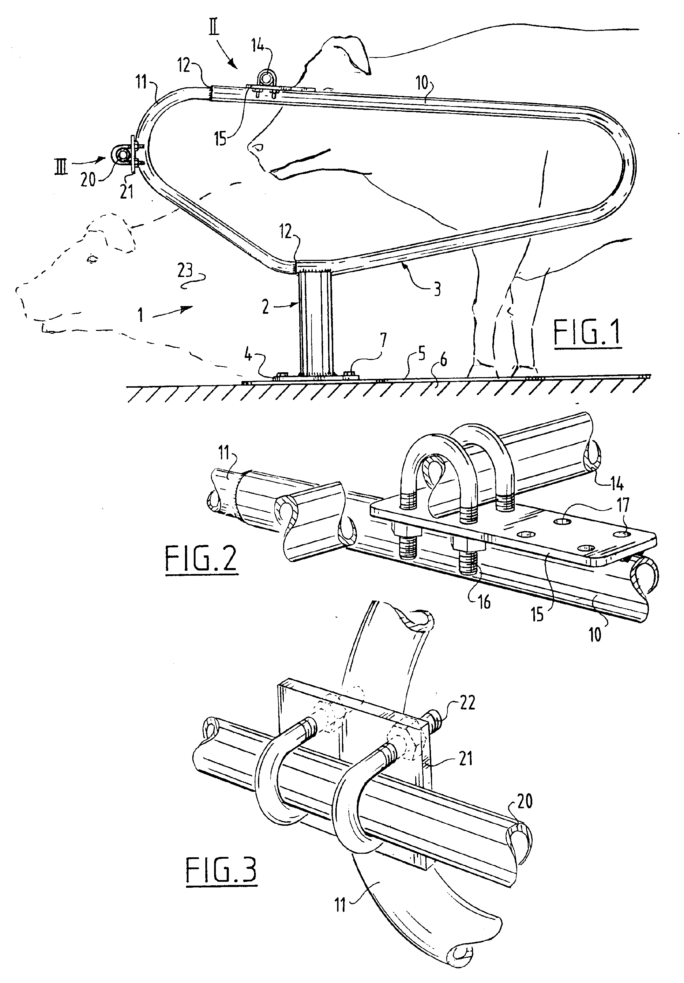

The cubicle partition 1 shown in fig. 1 is in typical manner one of a series of adjacently disposed partitions. Between each two cubicle partitions 1 is defined a cubicle in which a cow can lie down and rest.

The cubicle partition 1 comprises a console 2 and fixedly welded on top thereof a bar rail 3 closed in itself. Console 2 is substantially formed by a standing tube part with a greater diameter than that of bar rail 3. On its bottom end the console 2 carries a foot plate 4 with which the entire cubicle partition 1 is fitted to the floor 6 by means of bolts 7. A rubber mat 5 is also arranged in usual manner on the floor 6. Instead of being fixed to a floor as shown in fig. 1 a cubicle partition 1 can also be arranged by casting the foot part in the floor 6.

Bar rail 3 is itself assembled from a first rail portion 10 and a second rail portion 11 which is manufactured from a tube with a slightly smaller diameter than that used for the first rail portion 10. Tube portion 11 is pushed into tube portion 10 and joined thereto as one whole by means of welds 12.

Bar rail 3 is rigid because it has a form closed in itself. Console 2 is likewise rigid, having both torsional and bending stiffness. The whole cubicle partition 1 according to the invention thereby forms a rigid construction.

Welded onto the top of bar rail 3 is a fixing plate 15 for a shoulder bar 14 extending in transverse direction of the adjacently disposed cubicle partitions 1. When stepping inside a cow will at a given moment come with its shoulder into contact with the shoulder bar 14 and this forms the indication for the cow that it cannot move any further and can lie down at this position. In the embodiment shown the fixing plate 15 comprises four hole pairs 17 so that the shoulder bar 14 can be fastened in three different positions using brackets 16. The suitable position is selected depending on the size of the dairy cattle.

Because the fixing plate 15 is fixedly welded to the bar rail this gives the bar rail additional strength.

At the front the bar rail 3 carries a likewise welded vertical fixing plate 21 with which a so-called head bar 20 can be secured, also by means of brackets 22. This head bar 20 prevents the cow trying to leave the cubicle in forward direction from a lying position.

Owing to the shown form of bar rail 3 a free space 23 called a head hole is obtained in front of the console 2. When the cow is lying down it can thus stretch its head out to the sides which increases the comfort of the cow. Also when it stands up a free space for movement of the head of the cow is favourable.

To the rear of the console 2 a large free space is likewise defined, which has the advantage that in the lying position the cow is not obstructed by the cubicle partition. The comparatively limited dimension of the console 2 in lengthwise direction of the cubicle partition thus provides optimal freedom for the cow.

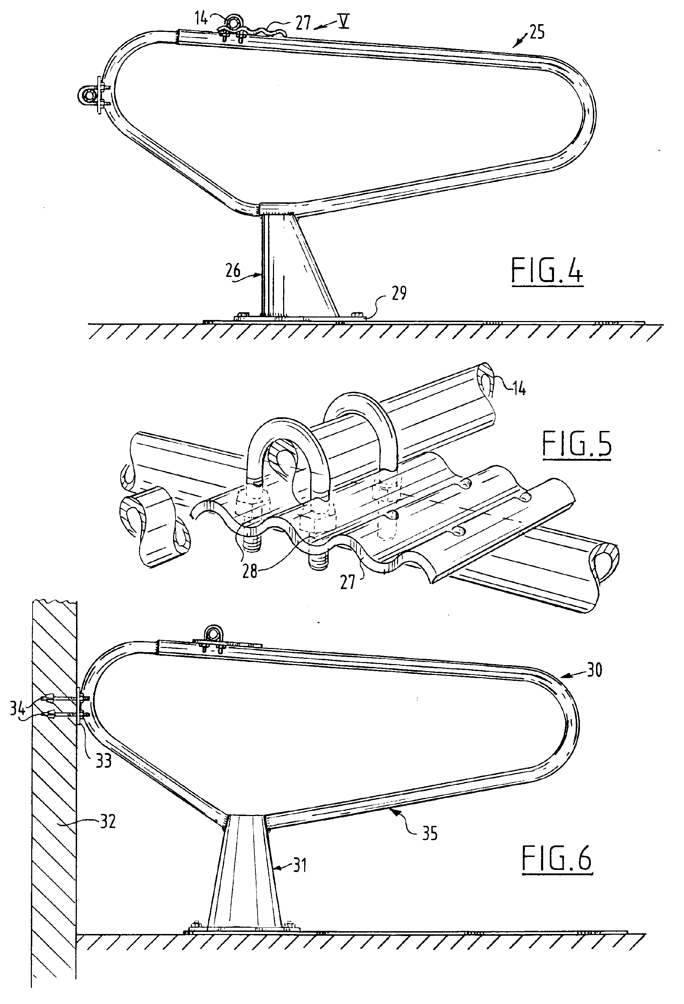

The embodiment of fig. 4 corresponds in large part with that of fig. 1. Console 26 has a "flattened" cone form in this embodiment, wherein the ground surface of the hollow portion of the console is oval. The foot plate 29 therefore has an increased length.

In this embodiment the fixing plate 27 for the shoulder bar is wave-shaped in section along the plane of the partition. The wave valleys 28 form seats for the shoulder bar 14 in the various positions.

In the cubicle partition 30 as shown in fig. 6 the bar rail 35 is welded fixedly with two ends on either side against the upper part of console 31. Bar rail 35 is thus closed in itself via the top end of console 31. Console 31 can be provided with holes into which the ends of bar rail 35 can be inserted and subsequently welded.

The vertical welded fixing plate 33 is not used in the application of fig. 6 for fitting thereon of a head bar but is used for mounting on a wall 32. Placed through the holes in the fixing plate 33 are bolts 34 which grip into the wall 32.

The invention is not limited to the embodiments shown in the figures. Although in preference the console and bar rail are fixedly welded to one another to obtain a rigid entity, it is also possible to connect the bar rail in other manner to the console, for instance by a bolt connection. In that case the consoles for the different cubicle partitions can be cast into the floor and the bar rails mounted on these consoles later. Nor does the console necessarily have to be of the same material as the bar rail. The console may for instance be of reinforced concrete and the bar rail of steel. The invention is therefore deemed to comprise all embodiment variants falling within the scope of the annexed claims.

## Claims

1. Cubicle partition (1) comprising a bar rail (3) which is manufactured from bent tube or profile, and which is provided with a single stand with only one leg for fixing immovably onto or into the floor extending vertically in a mounted position, and which bar rail (3) is bent into a closed loop and is fixed on the top end of the stand and extends substantially in one plane being vertical in the mounted position,
characterised in that
the stand is formed by a rigid console (2),
wherein in the mounted position measured in the vertically extending direction the size of the rigid console (2) is smaller than a vertical chord across the closed loop of bent tube or profile,
and wherein in the mounted position the parts of the loop extending away from the top end of the console in both directions are angled to the horizontal in an upward direction,
and wherein said bar rail (3) is bent into said loop without any members crossing said loop.

2. Cubicle partition as claimed in claim 1, **characterized in that** the console (2) is formed by a standing tube or profile part having a diameter greater than that of the bar rail (3).

3. Cubicle partition as claimed in claim 1 or 2, **characterized** **in that** this carries on the upper part a fixedly welded fixing plate (15, 27) for a shoulder bar (14) extending in transverse direction.

4. Cubicle partition as claimed in claim 3, **characterized in that**, in section along the plane of the partition (1), the fixing plate (27) is partly or wholly wave-shaped.

5. Cubicle partition as claimed in any of the foregoing claims, **characterized in that** this carries at the front a vertical fixedly welded fixing plate (21).

## Patentansprüche

1. Alkoventrennung (1) mit einer stangenartigen Schiene bzw. Stange (3), die aus einem gebogenen Rohr oder Profil hergestellt ist und mit lediglich einem einzelnen Ständer mit lediglich einem Bein zur unbeweglichen Befestigung auf oder in dem Boden vorgesehen ist, das sich vertikal in einer montierten Stellung erstreckt, wobei die stangenartige Schiene (3) zu einer geschlossenen Schleife gebogen und an dem oberen Ende des Ständers befestigt ist und sich im wesentlichen in einer Ebene erstreckt, die in montierter Stellung vertikal ist, dadurch gekennzeichnet, daß der Ständer aus einer festen bzw. steifen Konsole (2) gebildet ist, wobei in der montierten Stellung, gemessen in der sich vertikal erstreckenden Richtung, die Größe der festen Konsole (2) kleiner ist als eine vertikale Sehne der geschlossenen Schleife des gebogenen Rohres oder Profils, und wobei in der montierten Stellung die sich vom oberen Ende der Konsole in beide Richtungen erstreckenden Teile der Schleife gegenüber der Horizontalen in Richtung nach oben einen Winkel ausbilden, und wobei die stangenartige Schiene (3) in die Schleife gebogen ist, ohne daß irgendwelche Teile die Schleife kreuzen.

2. Alkoventrennung nach Anspruch 1, dadurch gekennzeichnet, daß die Konsole (2) durch ein stehendes Rohr oder ein Profilteil gebildet ist, dessen Durchmesser größer als derjenige der stangenartigen Schiene (3) ist.

3. Alkoventrennung nach Anspruch 1 oder 2, dadurch gekennzeichnet, daß sie auf ihrem oberen Teil eine fest angeschweißte Befestigungsplatte (15, 27) für eine Schulterstange (14) aufweist, welche sich in transversaler Richtung erstreckt.

4. Alkoventrennung nach Anspruch 3, dadurch gekennzeichnet, daß die Befestigungsplatte (27) im Schnitt entlang der Ebene der Trennung (1) teilweise oder vollständig wellenförmig ist.

5. Alkoventrennung nach einem der vorstehenden Ansprüche, dadurch gekennzeichnet, daß sie am vorderen Abschnitt eine vertikal fest angeschweißte Befestigungsplatte (21) aufweist.

## Revendications

1. Séparation de box (1) comprenant une traverse (3) qui est fabriquée à partir de tube ou de profilé courbe et qui est pourvue d'un montant unique avec, seulement, une jambe pour sa fixation inamovible sur le sol ou à l'intérieur de celui-ci et qui s'étend verticalement, en position montée, et dont la traverse (3) est recourbée en une boucle fermée et est fixée à l'extrémité supérieure du montant et qui s'étend pratiquement dans un plan vertical en position assemblée,
caractérisée en ce que
le montant est constitué d'une console rigide (2), dans laquelle, en position assemblée, la dimension de la console rigide (2) mesurée dans la direction verticale est inférieure à celle d'une corde verticale en travers de la boucle fermée du tube ou du profilé recourbé,
et dans laquelle, en position assemblée, les parties de la boucle qui s'éloignent de la partie supérieure de la console, dans les deux directions, forment un angle dirigé vers le haut, par rapport à l'horizontale,
et dans laquelle ladite traverse (3) est recourbée en formant ladite boucle, sans qu'aucun élément ne traverse ladite boucle.

2. Séparation de box selon la revendication 1, caractérisée en ce que la console (2) est constituée d'un tube ou d'un profilé vertical ayant un diamètre supérieure à celui de la traverse (3).

3. Séparation de box selon la revendication 1 ou 2, caractérisée en ce qu'elle porte, sur sa partie supérieure, une plaque de fixation fixée par soudure (15, 27) pour une barre d'épaule (14) qui s'étend dans la direction transversale.

4. Séparation de box selon la revendication 3, caractérisée en ce que, en coupe, le long du plan de la séparation (1), la plaque de fixation (27) est partiellement ou totalement ondulée.

5. Séparation de box selon l'une quelconque des revendications précédentes, caractérisée en ce qu'elle porte, à l'avant, une plaque de fixation verticale fixée par soudure (21).
